# EUROPÄISCHE PATENTANMELDUNG

(11) **EP 1 493 518 A1**
(43) Veröffentlichungstag der Anmeldung: **05.01.2005**
(21) Anmeldenummer: 04015536.8
(22) Anmeldetag: 01.07.2004
(51) Int. Cl.: B23B 31/02

(54) **Spannvorrichtung für Zahnräder und entsprechende Werkzeugmaschine**

(30) Priorität: 01.07.2003 DE 10329423
(71) Anmelder: Buderus Schleiftechnik GmbH, 35614 Asslar (DE)
(72) Erfinder: Krauss, Armin, 35753 Greifenstein - Allendorf (DE)
(74) Vertreter: Cohausz & Florack

(57) **Zusammenfassung**

Die Erfindung betrifft eine Spannvorrichtung für eine Werkzeugmaschine zum Spannen eines zu bearbeitenden Zahnrades (1). Die Spannvorrichtung weist zwei relativ zueinander bewegliche Ringe (3, 4) auf, die jeweils an ihrer Innenseite eine Verzahnung aufweisen. Dadurch können die Ringe (3, 4) auf das zu bearbeitende Zahnrad (1) Kräfte in Umfangsrichtung ausüben. Diese Spannvorrichtung und eine damit ausgerüstete Werkzeugmaschine zum spanabhebenden Bearbeiten eines Zahnrades (1) ermöglicht auf diese Weise das Ausrichten und Spannen des Zahnrades (1) unter Vermeidung unerwünschter Verformung.

## Beschreibung

Die Erfindung betrifft eine Spannvorrichtung für eine Werkzeugmaschine zum Spannen eines zu bearbeitenden Zahnrades sowie eine Werkzeugmaschine zum spanabhebenden Bearbeiten eines Zahnrades mit einem Spanwerkzeug und einer Spannvorrichtung zum Spannen des Werkstücks.

Eine Grundvoraussetzung für eine hochpräzise Bearbeitung von Werkstücken in einer Werkzeugmaschine besteht darin, dass das jeweils zu bearbeitende Werkstück möglichst exakt bezüglich der Maschinenachse ausgerichtet wird, um die bzw. entlang der das jeweilige Werkzeug während der Bearbeitung relativ zum Werkstück bewegt wird. In der Praxis sind die an die Exaktheit der Ausrichtung gestellten Anforderungen jedoch häufig nur schwer zu erfüllen. Dies gilt insbesondere für Zahnräder, die häufig eine in Bezug auf ihren großen Durchmesser kleine Wandstärke aufweisen.

Es sind Spannvorrichtungen, wie beispielsweise Spannfutter oder Spanndorne, bekannt, welche ein selbsttätiges, exaktes Ausrichten von Werkstücken ermöglichen. Diese Spannvorrichtungen setzen jedoch regelmäßig voraus, dass Kräfte auf das Werkstück aufgebracht werden, durch welche die für die Selbstzentrierung erforderliche Bewegung des Werkstücks ausgelöst wird. Diese Kräfte können zu einer unerwünschten Verformung des Werkstücks führen, durch die die Qualität des Arbeitsergebnisses beeinträchtigt wird.

Die Aufgabe der Erfindung besteht darin, ausgehend von dem voranstehend erläuterten Stand der Technik, eine Spannvorrichtung für eine Werkzeugmaschine zu schaffen, welche auf einfache Weise das Ausrichten und Spannen eines Zahnrades unter Vermeidung unerwünschter Verformung ermöglicht. Die Aufgabe der Erfindung umfasst auch das Bereitstellen einer entsprechenden Werkzeugmaschine.

Diese Aufgabe wird erfindungsgemäß dadurch gelöst, dass die Spannvorrichtung zwei relativ zueinander bewegliche, insbesondere verschiebbare und/oder verdrehbare Ringe umfasst, die jeweils an ihrer Innenseite eine Verzahnung aufweisen, so dass die Ringe auf das zu bearbeitende Zahnrad Kräfte in Umfangsrichtung ausüben können. Die Spannvorrichtung kann, wie im Folgenden erläutert wird, sowohl zum Spannen geradverzahnter als auch schrägverzahnter Räder verwendet werden. Mit dem Begriff "schrägverzahnt" sind im Sinne der Erfindung alle Zahnräder umfasst, deren Zahnflanken nicht in Axialrichtung verlaufen, die also nicht geradverzahnt sind. Schrägverzahnte Zahnräder im Sinne der Erfindung sind danach auch pfeilverzahnte Räder, Schraubenräder etc.

Zum Spannen eines schrägverzahnten Rades reicht es aus, wenn die innenverzahnten Ringe relativ zueinander in Axialrichtung verschoben werden. Dabei greift die innere Verzahnung der beiden Ringe, während diese axial aufeinanderzubewegt werden, jeweils seitlich in die Schrägverzahnung des zwischen den beiden Ringen angeordneten, zu bearbeitenden Zahnrades. Auf diese Weise wird das schrägverzahnte Zahnrad in den Zahnflanken verklemmt, indem ein Zahn des einen Ringes Druck auf eine Zahnflanke und ein Zahn des anderen Ringes Druck auf die gegenüberliegende Zahnflanke ausübt.

Zum Spannen eines geradverzahnten Rades ist es dagegen erforderlich, dass die innenverzahnten Ringe relativ zueinander in Umfangsrichtung verdreht werden können. Wenn beide Ringe auf das zu bearbeitende Zahnrad aufgeschoben worden sind, entsteht beim Verdrehen der beiden Ringe gegeneinander die gewünschte Klemmwirkung dadurch, dass ein Zahn des einen Ringes Druck auf eine Zahnflanke und ein Zahn des anderen Ringes Druck auf die gegenüberliegende Zahnflanke ausübt. Besonders vorteilhaft ist es dabei, wenn die zum Verklemmen erforderliche Bewegung neben der rotativen auch eine axiale Komponente hat, die Ringe also beim Spannvorgang gleichzeitig relativ zueinander verschoben und verdreht werden. Dadurch wird gegenüber einer rein rotativen Bewegung die Spanngenauigkeit erhöht.

Da erfindungsgemäß beim Spannen bzw. Verklemmen kaum Kräfte in Radialrichtung wirken, werden unerwünschte Verformungen des Werkstücks weitestgehend vermieden. Auch wird durch die erfindungsgemäße Vorrichtung gleichzeitig eine automatische Ausrichtung des Zahnrades während des Spannvorgangs erreicht, indem die Zähne der Ringe (Ringzähne) mit den Zähnen des zu bearbeitenden Zahnrades (Werkstückszähne) ineinander greifen.

Dabei sollten die Abstände der Zähne des einen Ringes mit den Abständen der Zähne des anderen Ringes übereinstimmen. Auf diese Weise wirken bei den beiden Ringen immer zwei Zähne zusammen, um zwischen sich einen Zahn des zu bearbeitenden Zahnrades festzuklemmen. Dabei ist es nicht unbedingt erforderlich, dass immer genau ein Zahn des Werkstücks zwischen zwei Ringzähnen verklemmt wird, sondern es können auch mehrere Zähne des Werkstücks zwischen zwei Ringzähnen liegen. In diesem Fall würde der Ringzahn des einen Ringes auf eine Flanke eines bestimmten Zahnes drücken und der entsprechende Ringzahn des anderen Ringes auf eine der ersten Flanke gegenüberliegende Flanke eines anderen Zahnes des Werkstücks drücken.

Vorteilhafterweise haben die Zähne jedes Ringes denselben Abstand zueinander, sind also gleichmäßig über den Umfang des Ringes verteilt. Dadurch wird auch der Druck während des Spannens bzw. Verklemmens gleichmäßig über den Umfang des Zahnrades verteilt. Dabei ist es besonders vorteilhaft, wenn die Anzahl der Ringzähne der Anzahl der Werkstückzähne entspricht, so dass jeder einzelne Werkstückzahn verklemmt wird.

In einer Ausgestaltung der erfindungsgemäßen Spannvorrichtung sind die beiden Ringe schrägverzahnt. Diese Ausgestaltung ist besonders geeignet zum Spannen eines schrägverzahnten Rades.

Von Vorteil insbesondere im Fall einer Schrägverzahnung sowohl des Werkstücks als auch der beiden Ringe ist es, wenn der Schrägungswinkel α der Ringzähne identisch mit dem Schrägungswinkel β der Werkstückzähne ist. Auf diese Weise wird eine optimale Klemmwirkung unter besonderer Schonung der einzelnen Werkstückzähne erreicht. Dies gilt gleichermaßen für eine Geradverzahnung. Hier wären α und β gleich 0.

Gemäß einer weiteren Ausführungsform der Erfindung kann vorgesehen sein, dass einer der beiden Ringe feststehend, das heißt ortsfest mit dem Maschinengestell der Werkzeugmaschine verbunden, und der andere Ring beweglich ist. Dabei kann der bewegliche Ring über Betätigungsbolzen in Axialrichtung bewegt werden. Mehrere dieser Betätigungsbolzen können in Bohrungen oder geeigneten Aussparungen, z.B. in Langlöchern, im Ring geführt sein. Auf diese Weise wird durch das Verstellen der Bolzen die Bewegung auf den beweglichen Ring übertragen. Um zusätzlich zu oder anstatt einer Axialbewegung auch eine Drehbewegung des beweglichen Ringes zu erreichen, kann vorgesehen sein, dass der bewegliche Ring in seiner äußeren Umfangsfläche eine Schrägnut aufweist, in die ein-feststehender Führungsstift eingreifen kann. Der Führungsstift wäre dann ebenfalls ortsfest mit dem Maschinengestell der Werkzeugmaschine verbunden.

Die erfindungsgemäße Aufgabe wird schließlich auch durch eine Werkzeugmaschine zum spanabhebenden Bearbeiten eines Zahnrades gelöst, die ein Spanwerkzeug und eine Spannvorrichtung zum Spannen des Werkstücks umfasst, wobei diese Spannvorrichtung wie voranstehend beschrieben, ausgebildet sein kann.

Nachfolgend wird die Erfindung anhand einer ein Ausführungsbeispiel darstellenden Zeichnung näher erläutert. Es zeigen schematisch:
- Fig. 1: ein schrägverzahntes, zu bearbeitendes Zahnrad in einer Ansicht von oben;
- Fig. 2: das Zahnrad aus Fig. 1 in einer perspektivischen Ansicht;
- Fig. 3: das Zahnrad aus Fig. 1 im gespannten Zustand in einer Ansicht von oben;
- Fig. 4: ein perspektivische Ansicht eines Ringes der erfindungsgemäßen Spannvorrichtung;
- Fig. 5: eine Schnittdarstellung eines Ausführungsbeispiels der erfindungsgemäßen Spannvorrichtung.

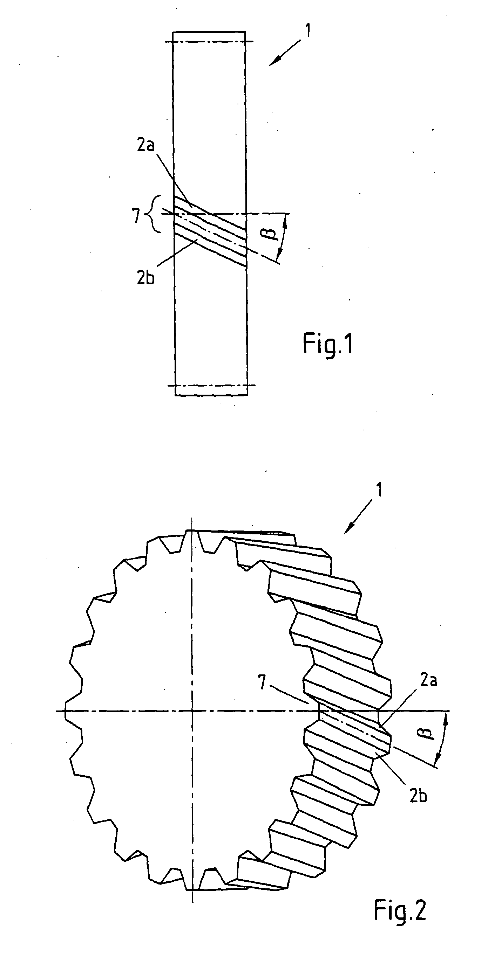

In Fig. 1 ist ein Zahnrad 1 mit Schrägverzahnung dargestellt, dass mit der erfindungsgemäßen Spannvorrichtung in einer Werkzeugmaschine ausgerichtet und gespannt werden kann. Das Zahnrad 1 weist eine Vielzahl von in Umfangsrichtung gleichmäßig verteilten Zähnen 7 auf, die mit einem Schrägungswinkel β relativ zur Axialrichtung schräggestellt sind. Jeder Zahn 7 weist zwei Flanken 2a und 2b auf, die sich gegenüberliegen.

In Fig. 2 ist die Schrägverzahnung perspektivisch dargestellt. Man erkennt deutlich, dass die Zähne relativ zur Axialrichtung, also der Richtung, in der die Bewegung der die Spannvorrichtung bildenden Ringe erfolgt, schräggestellt sind.

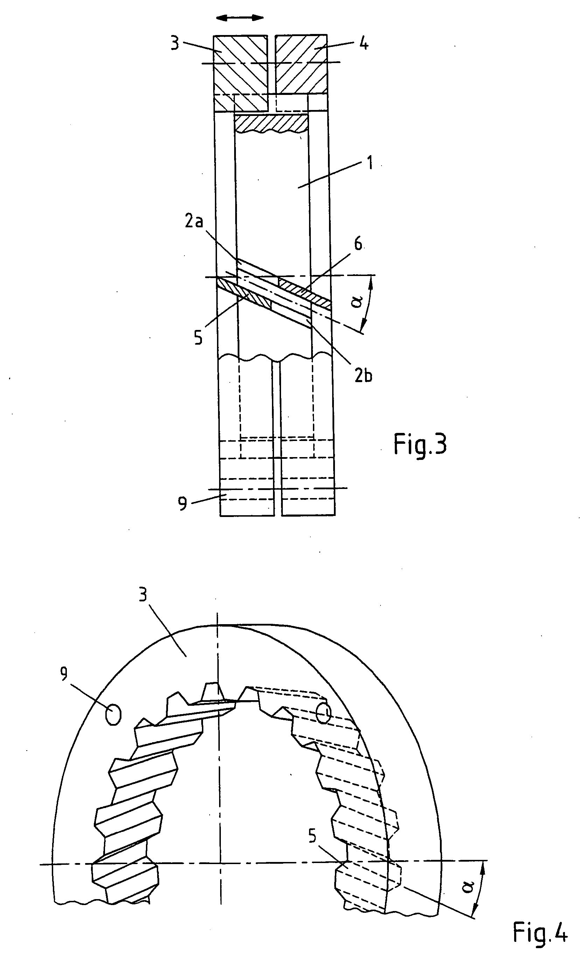

Fig. 3 zeigt das zuvor beschriebene Zahnrad 1 im gespannten Zustand. Das Zahnrad 1 befindet sich zwischen zwei Ringen 3 und 4, die jeweils eine der Verzahnung des Zahnrades entsprechende Innenverzahnung aufweisen. Dabei ist der rechte Ring 4 feststehend, das heißt ortsfest mit dem Maschinengestell 11 der Werkzeugmaschine verbunden. Der linke Ring 3 ist in Axialrichtung beweglich gelagert und kann relativ zum Ring 4 hin und her bewegt werden. Die Zähne 5 und 6 der Ringe 3 und 4 sind ebenfalls relativ zur Axialrichtung schräggestellt, wobei der Schrägungswinkel α der Ringzähne dem Schrägungswinkel β der Werkstückzähne entspricht. Im in Fig. 3 dargestellten Spannzustand drücken auf diese Weise die Zähne 6 auf die Flanken 2a eines jeden Werkstückzahnes 7 und die Zähne 5 auf die gegenüberliegenden Flanken 2b, wodurch das Zahnrad 1 sowohl ausgerichtet als auch gespannt wird. Dadurch, dass der Schrägungswinkel α der Ringe 3 und 4 dem Schrägungswinkel β des Zahnrades 1 entspricht, wird eine optimale und die Zähne 7 schonende Klemmwirkung erreicht.

Fig. 4 zeigt perspektivisch einen Ausschnitt eines Ausführungsbeispiels eines beweglichen Ringes 3. Die an der Innenseite des Ringes 3 angeordneten Zähne 5 weisen dabei alle denselben Schrägungswinkel α auf. In Ring 3 sind Führungsbohrungen 9 für Betätigungsbolzen 8 vorgesehen. Durch Verschieben bzw. Verstellen der Bolzen 8 in Axialrichtung wird eine Axialbewegung auf den Ring 3 übertragen.

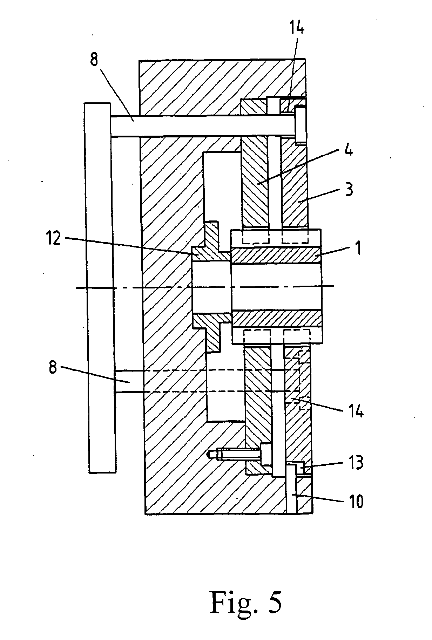

Fig. 5 verdeutlicht das zuvor für schrägverzahnte Räder beschriebene Spannprinzip nun am Beispiel eines Zahnrades 1 mit Geradverzahnung. Das Zahnrad 1 befindet sich im dargestellten Zustand in Eingriff mit zwei innenverzahnten Ringen 3 und 4. Ring 4 ist dabei feststehend, d. h. ortsfest mit dem Maschinengestell 11 verbunden, wohingegen Ring 3 über Betätigungsbolzen 8 in Axialrichtung relativ zum Ring 4 hin und her bewegt werden kann. Ein ebenfalls ortsfest mit dem Maschinengestell 11 der Werkzeugmaschine verbundener Führungsstift 1.0, der in eine Schrägnut 13 in der äußeren Umfangsfläche des beweglichen Rings 3 eingreift, bewirkt, dass Ring 3 neben der Axialbewegung auch eine Drehbewegung ausführt. Dazu sind in Ring 3 ferner Langlöcher 14 vorgesehen, in denen die Bolzen 8, die in Umfangsrichtung nicht beweglich sind, geführt sind. Durch die relativ zum feststehenden Ring 4 erfolgende Drehbewegung wird das Zahnrad 1 über seine Zähne 7 verklemmt. Durch die Axialkomponente wird gleichzeitig erreicht, dass beim Anziehen des Bolzens 8 das Zahnrad 1 gegen einen Längsanschlag 12 gedrückt wird und somit auch in Axialrichtung fixiert ist.

## Patentansprüche

1. Spannvorrichtung für eine Werkzeugmaschine zum Spannen eines zu bearbeitenden Zahnrades (1),
**dadurch gekennzeichnet, dass** zwei Ringe (3, 4) vorgesehen sind, die jeweils an ihrer Innenseite eine Verzahnung aufweisen und die relativ zueinander beweglich sind, so dass die Ringe (3, 4) auf das zu bearbeitende Zahnrad (1) Kräfte in Umfangsrichtung ausüben können.

2. Spannvorrichtung nach Anspruch 1,
**dadurch gekennzeichnet, dass** die Ringe (3, 4) relativ zueinander verschiebbar und/oder verdrehbar sind.

3. Spannvorrichtung nach Anspruch 1 oder 2,
**dadurch gekennzeichnet, dass** die Abstände der Zähne (5) des einen Ringes (3) identisch mit den Abständen der Zähne (6) des anderen Ringes (4) sind.

4. Spannvorrichtung nach einem der voranstehenden Ansprüche,
**dadurch gekennzeichnet, dass** die Zähne (5, 6) jedes Ringes (3, 4) denselben Abstand zueinander haben.

5. Spannvorrichtung nach einem der voranstehenden Ansprüche,
**dadurch gekennzeichnet, dass** die Anzahl der Zähne (5, 6) jedes Ringes (3, 4) der Anzahl der Zähne (7) des zu bearbeitenden Zahnrades (1) entspricht.

6. Spannvorrichtung nach einem der voranstehenden Ansprüche,
**dadurch gekennzeichnet, dass** die Ringe (3, 4) schrägverzahnt sind.

7. Spannvorrichtung nach einem der voranstehenden Ansprüche,
**dadurch gekennzeichnet, dass** der Verzahnungswinkel α der Ringe (3, 4) identisch mit dem Verzahnungswinkel β des zu bearbeitenden Zahnrades (1) ist.

8. Spannvorrichtung nach einem der voranstehenden Ansprüche,
**dadurch gekennzeichnet, dass** ein Ring (4) feststehend und ein Ring (3) beweglich ist.

9. Spannvorrichtung nach Anspruch 8,
**dadurch gekennzeichnet, dass** der bewegliche Ring (3) über im Ring (3) in Bohrungen (9) oder anderen geeigneten Aussparungen geführte Betätigungsbolzen (8) in Axialrichtung bewegbar ist.

10. Spannvorrichtung nach Anspruch 9,
**dadurch gekennzeichnet, dass** der bewegliche Ring (3) in seiner äußeren Umfangsfläche eine Schrägnut (13) aufweist, in die ein feststehender Führungsstift (10) eingreifen kann.

11. Werkzeugmaschine zum spanabhebenden Bearbeiten eines Zahnrades (1) mit einem Spanwerkzeug und einer Spannvorrichtung zum Spannen des Werkstücks,
**dadurch gekennzeichnet, dass** dass die Spannvorrichtung nach einem der Ansprüche 1-10 ausgebildet ist.
